# DEMANDE DE BREVET EUROPEEN

(11) **EP 4 814 282 A1**
(43) Date de publication de la demande: **30.09.2026**
(21) Numéro de dépôt: 26152889.7
(22) Date de dépôt: 20.01.2026
(51) Int. Cl.: F02C 7/052, F02C 7/057, F02C 9/42

(54) **PROCÉDÉ DE SURVEILLANCE, DURANT L' APPLICATION D'UN MODE DE FONCTIONNEMENT ASYMETRIQUE, D'UNE INSTALLATION MOTRICE MULTIMOTEUR COMPRENANT DES FILTRES À BARRIÈRE**

(30) Priorité: 25.03.2025 FR 2503060
(71) Demandeur: Airbus Helicopters, 13725 Marignane Cedex (FR)
(72) Inventeur: CERQUEIRA, Stéphane, 13725 MARIGNANE Cedex (FR); BIGEARD, Antoine, 13725 MARIGNANE Cedex (FR)
(74) Mandataire: GPI Brevets

(57) **Abrégé**

La présente invention concerne un procédé pour surveiller une installation motrice comprenant au moins deux moteurs à combustion alimentées en air par des filtres à barrière respectifs. Lors d'un mode de fonctionnement asymétrique, un moteur actif transmet une puissance à un rotor et un moteur passif ne transmet aucune puissance au rotor. De plus, le procédé comporte : détermination (STP1) d'une valeur courante d'au moins deux paramètres de surveillance incluant des taux de colmatage des filtres à barrière ; comparaison (STP2) avec un contrôleur de ladite valeur courante de chaque paramètre de surveillance à un seuil critique respectif. Si la valeur courante d'au moins un paramètre de surveillance est supérieure au seuil critique respectif: i) réactivation (STP3) automatique du moteur passif, et/ou ii) ouverture (STP4), d'une voie de dérivation alimentant en air le moteur passif ou le moteur actif.

## Description

La présente invention concerne un procédé de surveillance, durant l'application d'un mode de fonctionnement asymétrique, d'une installation motrice multimoteur comprenant des filtres à barrière.

Un aéronef peut comprendre plusieurs moteurs à combustion pour mettre en mouvement un système mécanique, et par exemple un système mécanique mettant en rotation au moins une voilure tournante sur un hélicoptère.

Les moteurs à combustion peuvent prendre la forme d'un turbomoteur, éventuellement à turbine libre. Un turbomoteur à turbine libre comprend un générateur de gaz muni d'un compresseur, d'une chambre de combustion et d'un ensemble de détente haute pression solidaire en rotation du compresseur. Le compresseur peut être muni d'un ou de plusieurs étages de compression. De même, l'ensemble de détente peut comprendre une ou plusieurs turbines de détente. En outre, le turbomoteur comporte au moins une turbine de travail basse pression, indépendante mécaniquement en rotation du compresseur et de l'ensemble de détente haute pression. La turbine de travail met alors en rotation un arbre de puissance connecté au système mécanique à mettre en mouvement.

Ainsi, un aéronef à voilure tournante peut comprendre une installation motrice ayant plusieurs moteurs à combustion pour mettre en mouvement un système mécanique.

L'installation motrice peut éventuellement fonctionner selon un mode de fonctionnement coopératif durant lequel les moteurs à combustion génèrent chacun une puissance motrice contribuant conjointement à mettre en mouvement le système mécanique.

L'installation motrice peut aussi fonctionner selon un mode de fonctionnement asymétrique en mettant en veille au moins un des moteurs à combustion. Sur un aéronef à voilure tournante, lors du mode de fonctionnement asymétrique, au moins un moteur actif est régulé pour assurer la mise en rotation de la voilure tournante en transmettant à cette voilure tournante, avec son arbre de puissance, une puissance motrice non nulle. Au moins un moteur passif est en revanche en veille afin de ne pas transmettre une puissance motrice à la voilure tournante.

Un moteur en veille peut être arrêté en ayant une chambre de combustion éteinte. La chambre de combustion du moteur passif n'est alors plus alimentée en carburant, et sur un turbomoteur, les organes tournants du générateur de gaz peuvent être ou ne pas être mis en mouvement par une machine électrique. Alternativement, un moteur en veille peut fonctionner à un régime de ralenti ou de super-ralenti, en ayant une chambre de combustion allumée et alimentée en carburant, le moteur en veille fonctionnant à très faible vitesse et ne transmettant cependant aucune puissance à la voilure tournante, le ou les moteurs actifs assurant l'intégralité de la fourniture de puissance. Par exemple, le moteur passif est dans un régime de ralenti en ayant une vitesse de rotation de l'ordre de 40% de sa vitesse nominale.

Le document EP 3209563 décrit notamment un mode de fonctionnement asymétrique.

Pour sortir du mode de fonctionnement asymétrique, le moteur passif doit être réactivé.

Selon un autre aspect, un aéronef peut comprendre un système de filtration par moteur pour filtrer l'air alimentant notamment ce moteur en comburant.

Un tel système de filtration peut notamment comprendre un filtre à barrière connu sous l'expression anglaise « Inlet Barrier Filter ». Un filtre à barrière est muni d'un média filtrant. Un tel média filtrant comporte usuellement une paroi poreuse, possiblement pliée pour maximiser la surface traversée par l'air.

Un filtre à barrière génère de fait des pertes d'installation qui sont fonction de son niveau de colmatage.

Dès lors, le système de filtration peut en outre comprendre une voie de dérivation, et un obturateur apte à obturer ou ne pas obturer cette voie de dérivation. L'obturateur est mobile d'une position fermée dans laquelle l'obturateur obture la voie de dérivation afin que la totalité de l'air alimentant un moteur soit filtré, à une position ouverte dans laquelle l'obturateur n'obture pas la voie de dérivation.

Selon l'invention, une telle installation motrice doit faire l'objet d'un traitement particulier lors de la mise en œuvre du mode de fonctionnement asymétrique puisqu'un niveau de colmatage élevé d'un filtre à barrière peut, par exemple, induire une perte de charge rendant difficile la réactivation du moteur en veille associé.

Le document FR 3 099 527 décrit un système de filtration muni d'un filtre à barrière et d'une voie de dérivation. Un système de surveillance comporte en outre au moins un calculateur configuré pour calculer une information relative à un taux de colmatage du filtre à barrière en fonction d'une mesure de pression différentielle et de la puissance motrice développée par le moteur.

Bien qu'efficace, un tel système de surveillance n'est pas adapté à un mode de fonctionnement asymétrique puisque le moteur en veille ne développe pas une puissance motrice.

Le document FR 3 103 177 décrit un système de filtration muni d'un filtre à barrière et d'une voie de dérivation. Un clapet d'obturation obture par défaut la voie de dérivation. Un système de commande comporte un organe de commande manuel pour commander une ouverture du clapet d'obturation. Le système de commande comporte en outre au moins un calculateur configuré pour calculer une valeur courante d'un taux de colmatage du filtre à barrière en fonction d'une mesure de pression différentielle et de la puissance motrice développée par le moteur. De plus, le système de commande comporte au moins un comparateur pour comparer la valeur courante du taux de colmatage avec une première valeur de seuil et avec une deuxième valeur de seuil, et au moins un alerteur pour générer un premier signal sensoriel et un second signal sensoriel en fonction du résultat des comparaisons effectuées.

Bien qu'efficace, un tel système de filtration n'est pas adapté à un mode de fonctionnement asymétrique puisque le moteur en veille ne développe pas une puissance motrice.

Le document US 2015/367945 est éloigné de l'invention en décrivant un aéronef ayant au moins un premier et un second moteur, chaque moteur comprenant une ouverture principale d'entrée d'air, une ouverture de dérivation d'entrée d'air et une sortie de prélèvement d'air. L'ouverture principale d'entrée d'air de chaque moteur est munie d'un filtre à barrière d'entrée, l'ouverture de dérivation d'entrée d'air étant munie d'une porte de décharge qui peut être actionnée par un élément de manœuvre associé. L'élément de manœuvre du premier moteur est relié à la sortie de prélèvement d'air du second moteur et peut être régulé par le courant de prélèvement d'air qui sort du second moteur en fonctionnement. De même, l'élément de manœuvre du second moteur est relié à la sortie de prélèvement d'air du premier moteur et peut être régulé par le courant de prélèvement d'air qui sort du premier moteur en fonctionnement.

Le document US 2017/067814 est aussi connu et éloigné de l'invention.

La présente invention a alors pour objet de proposer un procédé et un aéronef visant à optimiser la réactivation d'un moteur à combustion en veille durant un mode de fonctionnement asymétrique.

La présente invention concerne alors un procédé de surveillance pour surveiller une installation motrice comprenant au moins deux moteurs à combustion et une chaîne de transmission connectée à au moins un rotor d'un aéronef. Chaque moteur à combustion a un arbre de puissance connecté à la chaîne de transmission. L'installation motrice comprend un système de filtration par moteur, chaque système de filtration comprenant un filtre à barrière et une voie de dérivation obturable sur commande par un obturateur. L'aéronef comporte un système de régulation qui, lors d'un mode de fonctionnement asymétrique, régule à un régime actif au moins un moteur actif parmi les au moins deux moteurs à combustion et met en veille au moins un moteur passif parmi les au moins deux moteurs à combustion, le moteur actif développant avec son arbre de puissance une puissance motrice non nulle participant à la mise en rotation du rotor, le moteur passif ne transmettant aucune puissance au rotor. Un taux de colmatage de chaque filtre à barrière est calculé par un contrôleur à l'aide d'une loi par défaut en dehors du mode de fonctionnement asymétrique.

Lors du mode de fonctionnement asymétrique, le procédé de surveillance comporte les étapes suivantes :
- détermination d'une valeur courante d'au moins deux paramètres de surveillance, lesdits au moins deux paramètres de surveillance comprenant un taux de colmatage de chaque filtre à barrière, le taux de colmatage du filtre à barrière alimentant en air le moteur passif étant calculé par le contrôleur selon une loi alternative différente de la loi par défaut, le taux de colmatage du filtre à barrière alimentant en air le moteur actif étant calculé par le contrôleur selon la loi par défaut,
- comparaison avec le contrôleur de ladite valeur courante de chaque paramètre de surveillance à un seuil critique respectif,
- sous condition que la valeur courante d'au moins un paramètre de surveillance soit supérieure au seuil critique respectif, réalisation d'au moins une opération, ladite au moins une opération étant à choisir dans la liste suivante : i) réactivation automatique du moteur passif, ii) ouverture automatique au moins de la voie de dérivation alimentant en air le moteur passif ou le moteur actif en déplaçant l'obturateur correspondant dans une position ouverte avec un actionneur.

Le terme « loi » désigne une ou plusieurs équations mathématiques, un tableau de valeurs ou autres permettant d'obtenir la valeur souhaitée.

Ainsi, le procédé propose de surveiller les valeurs courantes de plusieurs paramètres de surveillance, pour évaluer à chaque itération la situation courante lorsque le mode de fonctionnement asymétrique est appliqué.

En particulier, des paramètres de surveillance peuvent prendre la forme respectivement des taux de colmatage des filtres à barrière.

Ainsi, le taux de colmatage est déterminé à l'aide d'une loi par défaut pour un filtre à barrière alimentant en air un moteur actif, et donc aussi pour tous les moteurs lors du mode collaboratif. En pratique, le taux de colmatage TCcor peut être établi à l'aide d'une loi par défaut prenant en considération la puissance motrice développée par le moteur alimenté en air par le filtre à barrière considéré. Par exemple, le taux de colmatage peut être déterminé par la loi donnée dans le document FR 3 099 527, à savoir : $TCcor = \left(Dptcor-Dpc\right) / \left(Dpd-Dpc\right)$ où la première limite Dpc et la seconde limite Dpd peuvent être variables en fonction de la puissance motrice courante développée par le moteur alimenté par le filtre à barrière, cette puissance motrice pouvant être évaluée par exemple avec un senseur de vitesse de rotation et un couplemètre ou en fonction d'un débit d'air alimentant le moteur concerné et mesuré par un capteur de débit, et Dptcor représente une pression différentielle évaluée avec des senseurs de pression et éventuellement corrigée en fonction de la vitesse de l'aéronef par rapport à l'air mesurée avec un senseur de vitesse air.

Ainsi, cette loi par défaut dépend de la puissance motrice courante développée par le moteur alimenté en air par le filtre à barrière concerné. Cependant, un moteur passif ne fournit pas une telle puissance motrice. L'invention permet de remédier à cet inconvénient en utilisant la loi par défaut pour un filtre à barrière alimentant en air un moteur actif, et une loi différente dite « loi alternative » pour un filtre à barrière alimentant en air un moteur passif.

Par ailleurs, chaque paramètre de surveillance est comparé à son propre seuil critique. Le contrôleur détermine alors si un paramètre de surveillance présente une valeur courante qui dépasse son seuil critique. Un tel seuil critique peut être établi par essais, simulations et/ou calculs de manière usuelle.

Dans l'affirmative, au moins une opération visant à limiter l'impact d'une telle situation est entreprise.

Ainsi, le système de régulation peut être sollicité pour sortir du mode de fonctionnement asymétrique en réactivant le ou les moteurs passifs pour rejoindre le mode de fonctionnement collaboratif. La chambre de combustion de chaque moteur passif est le cas échéant rallumée. Si un moteur passif est dans un régime de ralenti, ce moteur passif est réactivé en étant accéléré.

De manière alternative ou complémentaire, l'obturateur qui obture une voie de dérivation en liaison fluidique avec un moteur passif est placé dans une position ouverte pour ne plus obturer cette voie de dérivation. Cette caractéristique vise à optimiser la réactivation ultérieure du moteur passif concerné.

De manière alternative ou complémentaire, l'obturateur qui obture une voie de dérivation en liaison fluidique avec un moteur actif est placé dans une position ouverte pour ne plus obturer cette voie de dérivation. Cette caractéristique vise à optimiser le fonctionnement du moteur actif, par exemple si le filtre à barrière associé est en partie colmaté.

Ainsi, le procédé permet d'appliquer une procédure particulière pour surveiller l'installation motrice lors de l'application du mode de fonctionnement asymétrique, au sein d'un aéronef muni de filtres à barrière.

Le procédé peut comporter une ou plusieurs des caractéristiques qui suivent, prises seules ou en combinaison.

Ainsi, lesdits au moins deux paramètres de surveillance peuvent comporter au moins un paramètre à choisir parmi : une altitude de l'aéronef, une hauteur de l'aéronef, une vitesse de l'aéronef, une température de l'air ambiant.

En effet, ces différents facteurs peuvent avoir une influence sur le niveau de colmatage d'un filtre à barrière et/ou sur le fonctionnement des moteurs, et notamment sur la facilité à réactiver le moteur passif.

De manière complémentaire ou alternative, lesdits au moins deux paramètres de surveillance peuvent comporter une demande de puissance.

Une telle demande de puissance peut être évaluée de manière usuelle, par exemple par le biais de l'anticipateur d'un système de régulation. Au sein d'un giravion comprenant des pales formant des gouvernes aérodynamiques, un tel anticipateur génère usuellement un signal qui varie en fonction du pas commandé des pales.

De manière complémentaire ou alternative, lors du mode de fonctionnement asymétrique, le procédé de surveillance peut comporter un affichage, sur un afficheur, de la valeur courante du taux de colmatage du filtre à barrière alimentant en air le moteur passif selon une charte graphique alternative différente d'une charte graphique par défaut utilisée pour afficher le taux de colmatage du filtre à barrière alimentant en air le moteur actif.

Cette caractéristique permet à un pilote observant l'afficheur, de déterminer aisément si l'installation motrice fonctionne selon le mode de fonctionnement collaboratif ou le mode de fonctionnement passif. De plus, cette caractéristique permet à un pilote de distinguer le ou les moteurs passifs du ou des moteurs actifs. En synergie avec les caractéristiques précitées, cette caractéristique permet de surveiller de manière innovante une installation motrice durant un mode de fonctionnement asymétrique.

Selon un autre aspect, la loi alternative peut être : $tx = tx 0 - dt * alpha ,$ où « tx » représente la valeur courante du taux de colmatage, «tx0 » représente la valeur du taux de colmatage au moment d'une activation du mode de fonctionnement asymétrique, « dt » représente le temps passé depuis ladite activation du mode de fonctionnement asymétrique, « alpha » représente un paramètre d'ajustement, « = » représente le signe de l'égalité, « - » représente le signe de la soustraction, « * » représente le signe de la multiplication.

Puisqu'un moteur passif est en veille, une telle loi alternative peut présenter une précision suffisante.

Eventuellement, ledit paramètre d'ajustement peut être une constante prédéterminée.

La constante peut être déterminée par essais, calculs et/ou simulations par exemple.

Eventuellement, ledit paramètre d'ajustement peut être une variable déterminée en appliquant une loi d'ajustement prédéterminée.

La loi d'ajustement peut être déterminée par essais, calculs et/ou simulations par exemple.

Par exemple, la loi d'ajustement peut donner la valeur du paramètre d'ajustement en fonction d'une vitesse de l'aéronef et par exemple de la vitesse air vraie. De manière alternative ou complémentaire, la loi d'ajustement peut donner la valeur du paramètre d'ajustement en fonction d'une condition courante, et par exemple de la hauteur de l'aéronef et/ou de la température de l'air entourant l'aéronef. De manière alternative ou complémentaire, la loi d'ajustement peut donner la valeur du paramètre d'ajustement en fonction d'un paramètre moteur du moteur actif, tel qu'une puissance motrice ou un couple moteur.

Selon une possibilité compatible avec les précédentes, lors du mode de fonctionnement asymétrique, le procédé de surveillance peut comporter une comparaison de ladite valeur courante de chaque paramètre de surveillance à un seuil de vigilance respectif. Le procédé de surveillance comporte alors une génération d'une alerte avec un alerteur quand la valeur courante d'au moins un paramètre de surveillance est supérieure au seuil de vigilance respectif.

Cette caractéristique peut permettre d'alerter un pilote qu'un paramètre de surveillance se rapproche de son seuil critique afin que le pilote puisse, s'il le souhaite, prendre une mesure corrective, par exemple en sortant volontairement du mode de fonctionnement asymétrique ou en ouvrant une voie de dérivation. En synergie avec les caractéristiques précitées, cette caractéristique permet de surveiller de manière innovante une installation motrice durant un mode de fonctionnement asymétrique.

Selon une possibilité compatible avec les précédentes, la voie de dérivation alimentant en air le moteur passif pouvant être obturée par l'obturateur associé durant le mode de fonctionnement asymétrique, ladite réalisation d'au moins une opération peut comporter successivement :
- réactivation automatique du moteur passif, avec le système de régulation,
- si le moteur passif n'est pas réactivé à l'issue d'une durée prédéterminée, ouverture de la voie de dérivation alimentant en air le moteur passif en déplaçant dans une position ouverte l'obturateur obturant cette voie de dérivation, puis
- nouvelle réactivation automatique du moteur passif avec le système de régulation.

Dès lors, le système de régulation est sollicité pour sortir du mode de fonctionnement asymétrique en réactivant le ou les moteurs passifs pour rejoindre le mode de fonctionnement collaboratif durant lequel tous les moteurs fournissent une puissance motrice, hors cas de panne.

En cas d'échec de la réactivation d'un moteur passif, la voie de dérivation alimentant en air ce moteur passif est ouverte pour pouvoir maximiser le flux d'air alimentant le moteur passif à réactiver. Une nouvelle réactivation du moteur passif est alors initiée. En cas de nouvel échec, une alerte peut être émise.

Cette procédure permet de limiter la sollicitation de la voie de dérivation pour réactiver un moteur mis en veille lors du mode de fonctionnement asymétrique.

Le procédé peut comporter une détection que le moteur passif n'est pas réactivé à l'issue d'une durée prédéterminée lorsqu'au moins un paramètre moteur prédéterminé de ce moteur passif est inférieur à une limite respective.

La valeur d'un tel paramètre moteur peut être évaluée à l'aide d'un senseur moteur usuel, tel qu'un senseur de température mesurant une température d'huile, ou senseur de température mesurant une température de gaz, ou senseur de vitesse mesurant une vitesse de rotation d'une turbine par exemple.

Outre un procédé, l'invention vise un aéronef, ledit aéronef ayant une installation motrice comprenant au moins deux moteurs à combustion et une chaîne de transmission connectée à au moins un rotor. Chaque moteur à combustion a un arbre de puissance connecté à la chaîne de transmission. L'installation motrice comprend un système de filtration par moteur respectif, chaque système de filtration comprenant un filtre à barrière et une voie de dérivation obturable sur commande par un obturateur. L'aéronef comporte un système de régulation qui, lors d'un mode de fonctionnement asymétrique, régule à un régime actif au moins un moteur actif parmi les au moins deux moteurs à combustion et met en veille au moins un moteur passif parmi les au moins deux moteurs à combustion, le moteur actif développant lors du régime actif et avec son arbre de puissance une puissance motrice active non nulle participant à la mise en rotation du rotor, le moteur passif ne transmettant aucune puissance au rotor.

L'aéronef comporte au moins un contrôleur configuré pour mettre en œuvre le procédé de surveillance conjointement avec le système de régulation et les actionneurs.

Eventuellement, un ou des senseurs de surveillance sont configurés pour mesurer une valeur courante d'un ou de plusieurs paramètres de surveillance respectif. De plus, le contrôleur est configuré pour comparer chaque valeur courante au seuil critique respectif.

Le système de régulation est alors configuré pour réactiver automatiquement le ou les moteurs passifs lorsqu'une valeur courante d'un ou de plusieurs paramètres de surveillance est supérieure au seuil critique correspondant et/ou un actionneur est alors configuré pour déplacer l'obturateur obturant la voie de dérivation alimentant en air le moteur actif ou le moteur passif.

Eventuellement, l'aéronef peut comporter au moins un des senseurs de surveillance suivants : un senseur de température extérieure mesurant une température extérieure de l'air ambiant entournant l'aéronef, un senseur de vitesse mesurant une vitesse courante de l'aéronef, un senseur de hauteur, un senseur d'altitude, un anticipateur pour évaluer une demande de puissance.

Eventuellement, l'aéronef peut comporter un alerteur.

Eventuellement, l'aéronef peut comporter un afficheur.

L'invention et ses avantages apparaîtront avec plus de détails dans le cadre de la description qui suit avec des exemples donnés à titre illustratif en référence aux figures annexées qui représentent :
la figure 1, un schéma illustrant un aéronef selon l'invention, et
la figure 2, un schéma illustrant le procédé de l'invention.

Les éléments présents dans plusieurs figures distinctes sont affectés d'une seule et même référence.

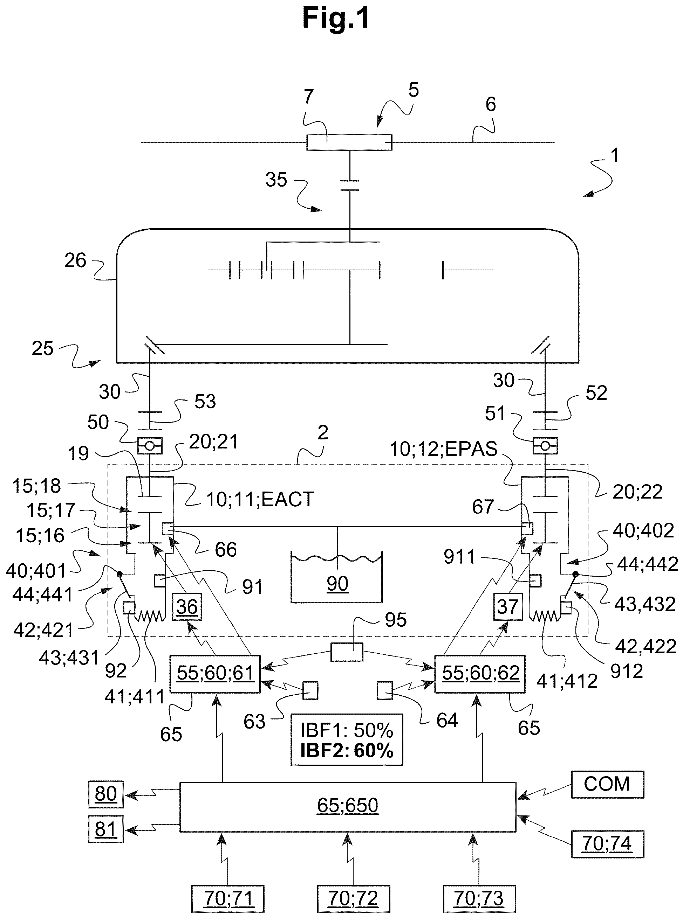

La figure 1 présente un exemple d'aéronef 1 selon l'invention. Cet aéronef 1 comporte un rotor 5. Ce rotor 5 est muni d'au moins une pale 6 mobile en rotation et éventuellement portée par un moyeu 7 ou équivalent. Par exemple, le rotor 5 forme une hélice fixe ou basculante, une voilure tournante, un rotor anticouple.

L'aéronef 1 comporte une installation motrice 2 pour mettre en rotation le rotor 5. Cette installation motrice 2 est pourvue d'au moins deux moteurs à combustion 10. La référence 10 désigne n'importe quel moteur à combustion, les références 11, 12 désignant des moteurs particuliers si besoin.

Selon un exemple, au moins un moteur à combustion 10 peut être un turbomoteur. Un tel turbomoteur 10 comporte un générateur de gaz 15 qui est muni d'au moins une turbine de compression 16, d'une chambre de combustion 17 dans laquelle est injecté le carburant et d'au moins une turbine de détente 18 liée en rotation à la ou aux turbines de compression 16. De plus, le turbomoteur 10 peut comporter au moins une turbine de travail 19 qui met en mouvement directement ou indirectement un arbre de puissance 20 du moteur 10.

Indépendamment du type des moteurs, chaque moteur à combustion 10 comporte donc un arbre de puissance 20 connecté à une chaîne de transmission de puissance 25. La chaîne de transmission de puissance 25 est alors reliée de manière usuelle au rotor 5. La référence 20 désigne n'importe quel arbre de puissance, les références 21, 22 désignant des arbres de puissance particuliers respectivement des deux moteurs 11 ,12.

A titre illustratif, la chaîne de transmission de puissance 25 peut être munie d'une boîte de transmission de puissance 26 qui est mécaniquement interposée entre les moteurs 10 et le rotor 5. La boîte de transmission de puissance 26 peut être munie d'un arbre d'entrée 30 par moteur 10 et d'engrenages divers agencés entre les arbres d'entrée 30 et un mât rotor 35 solidaire en rotation du moyeu 7.

La chaîne de transmission de puissance 25 peut comprendre au moins une roue libre 50, 51, par exemple entre chaque moteur 10 et la boîte de transmission de puissance 26, et/ou au moins un arbre de liaison 53, 54, et/ou au moins un connecteur autorisant des désalignements, etc. La littérature décrit diverses boîtes de transmission de puissance et diverses chaînes de transmission de puissance, l'exemple décrit étant donné uniquement à titre illustratif.

Par ailleurs, l'installation motrice 2 comprend un système de filtration 40 par moteur. Chaque système de filtration 40 comprend un filtre à barrière 41 et une voie de dérivation 42 qui sont tous deux en communication fluidique avec le moteur 10 associé via un ou des conduits. La voie de dérivation 42 est obturable par un obturateur 43 respectif. Cet obturateur 43 peut être mis en mouvement par un actionneur 44 entre une position fermée dans laquelle l'obturateur obture la voie de dérivation associée, et une position ouverte dans laquelle l'obturateur n'obture pas la voie de dérivation associée. Par exemple, un tel actionneur 44 peut comprendre un vérin hydraulique ou pneumatique ou encore un moteur électrique. A titre d'illustration, un actionneur 44 peut déplacer en translation ou en rotation au moins un volet apte à obturer la voie de dérivation 42 associée.

Selon l'exemple illustré, un premier système de filtration 401 comporte un premier filtre à barrière 411 et une première voie de dérivation 421 pour alimenter en air le premier moteur 11, la première voie de dérivation 421 étant obturable par un premier obturateur 431 pouvant être mis en mouvement par un premier actionneur 441. De plus, un deuxième système de filtration 402 comporte un deuxième filtre à barrière 412 et une deuxième voie de dérivation 422 pour alimenter en air le deuxième moteur 12, la deuxième voie de dérivation 422 étant obturable par un deuxième obturateur 432 pouvant être mis en mouvement par un deuxième actionneur 442.

Par ailleurs, les moteurs 10 sont des moteurs à combustion fonctionnant avec du carburant et pouvant être démarrés par des démarreurs 36, 37 schématisés pour ne pas alourdir la figure 1. Dès lors, l'aéronef 1 comporte un système de régulation 55 pour piloter les démarreurs 36, 37 et la puissance motrice délivrée par chaque moteur 10 avec son arbre de puissance 20.

Ainsi, le système de régulation 55 comporte un doseur de carburant 66, 67 par moteur 10. Chaque moteur 10 est alors relié via son propre doseur de carburant 66, 67 à au moins un réservoir de carburant 90.

Le système de régulation 55 peut comporter un calculateur moteur 60 par moteur 10. Un calculateur peut comprendre une unité de traitement. Une telle unité de traitement peut avoir par exemple, au moins un processeur et au moins une mémoire, au moins un circuit intégré, au moins un système programmable, au moins un circuit logique, ces exemples ne limitant pas la portée donnée à l'expression « unité de traitement ». Les calculateurs moteurs 60 peuvent communiquer entre eux par des liaisons filaires ou non filaires.

Selon l'exemple décrit, l'installation motrice 2 comporte deux calculateurs moteur 61, 62 contrôlant respectivement les deux moteurs 11, 12. Chaque calculateur moteur 60 est configuré pour piloter le moteur 10 associé et le faire fonctionner selon le régime requis. Chaque calculateur moteur 61, 62 peut notamment contrôler le doseur de carburant 66, 67 de ce moteur 11, 12. Chaque calculateur moteur 61,62 peut être relié à cet effet à de multiples senseurs moteurs pour contrôler le moteur 11,12 associé, tel que par exemple :
- un senseur moteur de température mesurant la température d'une huile circulant dans le moteur tel qu'un thermocouple par exemple,
- un senseur moteur de température mesurant la température d'un gaz circulant dans le moteur tel qu'un thermocouple par exemple,
- un senseur moteur de vitesse mesurant par exemple la vitesse de rotation d'un organe tournant du turbomoteur tel qu'un arbre du générateur de gaz ou un arbre de travail mis en mouvement par une turbine libre éventuellement, un tel senseur pouvant comprendre un senseur de position et un dérivateur ou un accéléromètre et un intégrateur par exemple,
- un couplemètre mesurant un couple moteur sur un tel organe tournant, etc.

Par senseur, on entend ici un capteur physique capable de mesurer directement le paramètre en question, mais aussi un système pouvant comprendre un ou plusieurs capteur(s) physique(s) ainsi que des moyens de traitement du signal permettant de fournir une estimation du paramètre à partir des mesures fournies par ces capteurs physiques. De manière similaire, on désignera par mesure de ce paramètre aussi bien une mesure brute d'un capteur physique qu'une mesure obtenue par un traitement de signal plus ou moins complexe à partir de mesures brutes.

Eventuellement, les calculateurs moteurs 60 peuvent être reliés à un anticipateur 95 qui émet un signal porteur d'une demande de puissance.

On se référera à la littérature pour avoir plus d'informations sur la régulation d'un moteur.

Par ailleurs, l'aéronef comporte un contrôleur 65 appliquant le procédé de surveillance de l'invention. Le contrôleur 65 peut comprendre les calculateurs moteurs 60. Ainsi, un calculateur moteur 60 peut remplir la fonction d'un calculateur moteur usuel, et au moins une fonction du contrôleur 65.

De manière complémentaire ou alternative, le contrôleur 65 peut comprendre un calculateur de gestion 650 dédié ou non au procédé de surveillance de l'invention. Le calculateur de gestion 650 peut comprendre par exemple au moins une unité de traitement. Le calculateur de gestion 650 peut communiquer par des liaisons filaires ou non filaires avec chaque calculateur moteur 60. Le calculateur de gestion 650 peut communiquer avec chacun des senseurs moteurs précités, directement ou via un calculateur moteur 60, et notamment avec l'anticipateur 95.

Indépendamment de sa composition, au moins un calculateur du contrôleur 65 peut communiquer par une liaison filaire ou non filaire avec au moins un alerteur 80 pour générer des alertes. Un tel alerteur 80 peut, par exemple, comprendre un afficheur apte à afficher un message, une diode électroluminescente qui s'allume sur commande du contrôleur 65, un haut-parleur...

Eventuellement, au moins un calculateur du contrôleur 65 peut communiquer par une liaison filaire ou non filaire avec au moins un afficheur 81 pour fournir des informations à un pilote. Un tel afficheur 81 peut, par exemple, comprendre un écran, un système d'affichage dit « tête-haute », etc....

En outre, chaque calculateur moteur 60 peut communiquer avec au moins une interface homme-machine de pilotage 63, 64, voire avec une interface homme-machine de pilotage par moteur 10, soit deux interfaces 63, 64 selon l'exemple donné. Chaque interface homme-machine de pilotage 63, 64 peut par exemple émettre un signal porteur d'un ordre d'arrêt dans une position POS1, d'un ordre de mise au régime de ralenti dans une position POS2 ou d'un ordre de mise à un régime de vol du moteur 10 concerné dans une position POS3.

En outre, au moins un calculateur du contrôleur 65 peut communiquer avec une interface homme-machine de commande COM qui est manipulable pour activer, voire désactiver manuellement, le mode de fonctionnement asymétrique.

Chaque interface homme-machine 63, 64, COM peut comprendre un organe manœuvrable par un pilote, tel qu'un bouton ou un levier par exemple, un écran tactile, une commande vocale... Selon l'exemple illustré, l'interface homme-machine COM ainsi que l'afficheur 81 et l'alerteur 80 communiquent avec le calculateur de gestion 650. De manière alternative ou complémentaire, l'interface homme-machine COM ainsi que l'afficheur 81 et l'alerteur 80 communiquent avec un, voire chaque, calculateur moteur 60.

Par ailleurs, le contrôleur 65 peut communiquer avec au moins un senseur dit « senseur de surveillance 70 ».

Ainsi, le contrôleur 65 peut communiquer avec un ou plusieurs des senseurs suivants :
- des senseurs de pression 91, 92, 911, 912 pour effectuer une mesure de pression différentielle Δpt entre une pression de référence et une pression mesurée en aval de chaque filtre à barrière, la pression de référence pouvant par exemple être la pression atmosphérique de l'air situé en dehors de l'aéronef ou encore une pression d'entrée de l'air mesurée en amont du filtre à barrière considéré,
- un senseur de température extérieure 71 mesurant une température extérieure T0 de l'air entournant l'aéronef 1, tel qu'un thermocouple par exemple,
- un senseur de vitesse 72 mesurant une vitesse courante de l'aéronef 1, un tel senseur de vitesse pouvant comprendre un système de positionnement par satellites et/ou un système à tube de Pitot par exemple,
- un senseur de hauteur 73, tel qu'une radiosonde par exemple, et
- un senseur d'altitude 74, tel qu'un système barométrique par exemple.

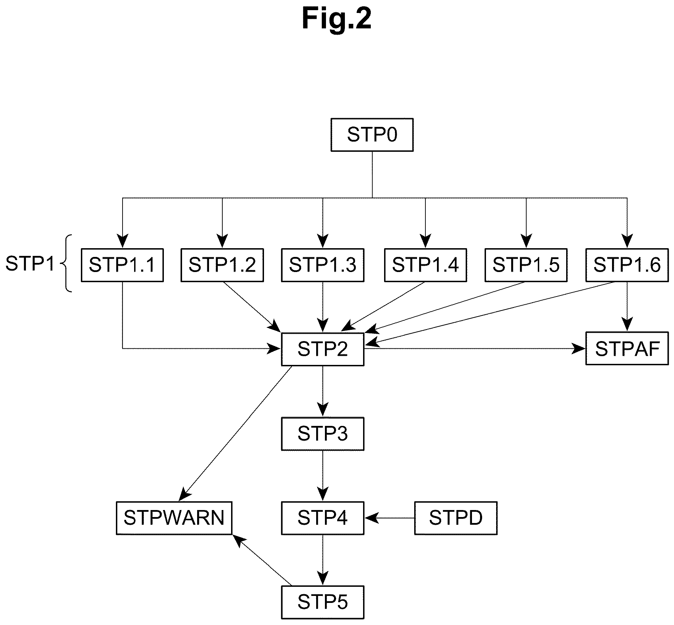

La figure 2 illustre le procédé de pilotage selon l'invention, ce procédé pouvant être mis en œuvre par un aéronef 1 à voilure tournante du type de la figure 1. Le procédé est illustré avec l'utilisation du système de régulation 55 de la figure 1. Cependant, ce procédé est applicable avec un système de régulation dépourvu d'un calculateur de gestion 650, les calculateurs moteurs 60 pouvant être aisément configurés pour l'appliquer.

Durant un mode de fonctionnement collaboratif, chaque moteur à combustion 10 est un moteur dit actif qui est régulé par le système de régulation 55 pour développer avec son arbre de puissance 20 une puissance motrice active non nulle participant à la mise en rotation du rotor 5. Par exemple, la première interface homme-machine de pilotage 63 est placée dans la position POS3, et transmet un signal de commande au calculateur moteur 61. De même, la deuxième interface homme-machine de pilotage 64 est placée dans la position POS3, et transmet un signal de commande au calculateur moteur 62.

Dans ce mode de fonctionnement collaboratif, chaque obturateur 43 obture ou n'obture pas la voie de dérivation 44 associée.

Par ailleurs, le contrôleur 65 calcule, pour chaque filtre à barrière 41, un taux de colmatage tx du filtre à barrière 41 selon une loi par défaut. La loi par défaut peut dépendre de la puissance motrice non nulle développée par le moteur 10 associé. La loi par défaut peut être du type décrit dans le document FR 3 099 527 ou dans le document FR 3 103 177 A1. Une telle loi par défaut peut être mise en œuvre, à l'aide des senseurs de pression 91, 92, 911, 912 et de la puissance motrice courante déterminée de manière classique par les calculateurs moteurs.

L'afficheur 81 peut afficher cette information selon une charte graphique par défaut. Le terme « charte graphique » désigne la manière dont est affichée une information, et par exemple sa police de caractères, sa couleur, le fait de surligner ou de ne pas surligner des caractères, l'épaisseur de traits, etc.

Pour activer le mode de fonctionnement asymétrique, un pilote peut manœuvrer l'interface homme-machine de commande COM durant une étape préliminaire STP0.

Durant le mode de fonctionnement asymétrique, le système de régulation maintient actif au moins un des moteurs dit « moteur actif EACT », et met en veille au moins un des moteurs dit « moteur passif EPAS ». Le ou les moteurs passifs EPAS sont alors soit arrêtés en ayant une chambre de combustion éteinte avec éventuellement au moins un compresseur et une turbine du générateur de gaz en mouvement, soit mis au ralenti afin de ne pas transmettre une puissance motrice via la roue libre 50,51 associée.

Eventuellement, l'étape préliminaire STP0 peut comprendre une étape de détection, avec le système de régulation 55, que le mode de fonctionnement asymétrique est activé, par exemple en détectant l'émission d'un signal porteur d'un ordre de mettre en œuvre ce mode de fonctionnement asymétrique par l'interface homme-machine de commande COM.

Lorsque ce mode de fonctionnement asymétrique est activé, le procédé peut comporter la détermination, lors d'une phase STP1, de valeurs courantes de plusieurs paramètres de surveillance. Dès lors, le procédé comporte la comparaison, durant une étape STP2 et avec le contrôleur 65, de chaque valeur courante à au moins un seuil de comparaison respectif. Un tel seuil de comparaison peut éventuellement être fixe ou variable, par exemple en fonction de l'environnement.

En particulier, les taux de colmatage tx des filtres à barrière 41 forment des paramètres de surveillance.

Durant le mode de fonctionnement asymétrique, le contrôleur 65 calcule alors la valeur courante du taux de colmatage tx de chaque filtre à barrière 41 durant une étape STP1.1, chaque taux de colmatage tx pouvant être comparé à au moins un seuil de comparaison dit « seuil critique de colmatage ». Par exemple, ce seuil peut être fixe ou variable, possiblement en fonction de l'environnement et/ou d'un gradient de l'évolution du colmatage et/ou d'un paramètre du moteur actif tel qu'éventuellement une évolution d'une vitesse de rotation d'un organe du moteur par rapport au vol précédent.

En particulier, le taux de colmatage tx du filtre à barrière 41 alimentant en air le moteur passif EPAS est calculé selon une loi alternative différente de la loi par défaut utilisée pour le moteur actif EACT.

La loi alternative peut prendre la forme suivante : $tx = tx 0 - dt * alpha ,$ où « tx » représente la valeur courante du taux de colmatage, «tx0 » représente la valeur du taux de colmatage au moment d'une activation du mode de fonctionnement asymétrique, et donc calculée précédemment avec la loi par défaut, « dt » représente le temps passé depuis ladite activation du mode de fonctionnement asymétrique, « alpha » représente un paramètre d'ajustement, « = » représente le signe de l'égalité, « - » représente le signe de la soustraction, « * » représente le signe de la multiplication.

Le paramètre d'ajustement alpha peut être une constante prédéterminée, ou une variable établie selon une loi d'ajustement prédéterminée.

Eventuellement, la valeur courante de chaque taux de colmatage est transmise à l'afficheur 81, en plus d'une information que le moteur 10 associé est dans le mode passif ou actif. Le procédé de surveillance peut alors comporter l'affichage, durant une étape STPAF et sur l'afficheur 81, de la valeur courante du taux de colmatage tx du moteur passif selon une charte graphique alternative différente d'une charte graphique par défaut utilisée pour le moteur actif EACT, par exemple avec des caractères présentant des épaisseurs différentes ou des polices de caractères différentes.

Selon l'exemple illustré sur la figure 1 le deuxième moteur 12 est un moteur passif EPAS, l'afficheur 81 affichant la suite de caractère « IBF1 : 50% » avec des traits fins pour signaler un taux de colmatage de 50% du premier filtre à barrière 411 alimentant le moteur actif 11, et la suite de caractère « IBF2 : 60% » est affichée en gras avec des traits épais pour signaler un taux de colmatage de 60% du deuxième filtre à barrière 412 alimentant en air le moteur passif EPAS.

Par ailleurs, un paramètre de surveillance peut être un paramètre variant en fonction d'un déplacement de l'aéronef 1.

Selon une possibilité, un paramètre de surveillance peut être une température à l'extérieur de l'aéronef 1. Dès lors, le senseur de température 71 peut transmettre, durant une étape STP1.2 et au contrôleur 65, un signal porteur de la température extérieure T0, le contrôleur 65 comparant la température extérieure T0 à au moins un seuil de température.

Selon une possibilité, un paramètre de surveillance peut être une vitesse de déplacement de l'aéronef 1. Dès lors, le senseur de vitesse 72 peut transmettre, durant une étape STP1.3 et au contrôleur 65, un signal porteur d'une vitesse de l'aéronef 1, par exemple une vitesse air ou une vitesse sol, le contrôleur 65 comparant la vitesse à au moins un seuil de vitesse.

Selon une possibilité, un paramètre de surveillance peut être une hauteur de l'aéronef 1, le terme « hauteur » désignant une distance séparant l'aéronef 1 du relief survolé contrairement à l'altitude qui fait référence à une altitude barométrique par exemple. Dès lors, le senseur de hauteur 73 peut transmettre, durant une étape STP1.4 et au contrôleur 65, un signal porteur d'une hauteur de l'aéronef 1. Le contrôleur 65 compare alors la hauteur à au moins un seuil de hauteur.

Selon une possibilité, un paramètre de surveillance peut être une altitude de l'aéronef 1. Dès lors, le senseur d'altitude 74 peut transmettre, durant une étape STP1.5 et au contrôleur 65, un signal porteur d'une altitude de l'aéronef 1, le contrôleur 65 comparant l'altitude à au moins un seuil d'altitude.

Selon une possibilité, un paramètre de surveillance peut être une demande en puissance de l'aéronef 1. Dès lors, l'anticipateur 95 peut transmettre, durant une étape STP1.6 et au contrôleur 65, un signal porteur d'une demande en puissance motrice, le contrôleur 65 comparant la demande en puissance motrice à au moins un seuil de puissance.

Eventuellement, si la valeur courante d'un paramètre de surveillance est supérieure à un seuil de comparaison dit « seuil de vigilance », le contrôleur 65 transmet un signal à l'alerteur pour générer une alerte durant une étape STPWARN.

Indépendamment de cet aspect, si la valeur courante d'un paramètre de surveillance est supérieure à un seuil de comparaison dit « seuil critique », au moins une opération complémentaire est réalisée. Pour un même paramètre, le seuil critique est supérieur au seuil de vigilance.

Selon une possibilité, le contrôleur 65 requiert dans ce cas une sortie automatique du mode de fonctionnement asymétrique. Le contrôleur 65 génère un signal pour réactiver le moteur passif EPAS automatiquement durant une étape de première réactivation STP3. Selon la variante de la figure 1, le calculateur de gestion 650 transmet alors un signal au calculateur moteur 60 concerné pour effectuer la réactivation.

De manière alternative ou complémentaire, le procédé comporte une ouverture automatique, durant une étape STP4 et avec un actionneur 44 piloté par le contrôleur 65, de la voie de dérivation 42 alimentant en air le moteur passif EPAS ou le moteur actif EACT en mettant l'obturateur associé dans sa position ouverte pour ne plus obturer cette voie de dérivation 42. Le contrôleur 65 transmet un signal à l'actionneur 44, directement, ou via un système avionique par exemple, pour ouvrir la voie de dérivation 42. Si l'obturateur 43 est déjà dans une position ouverte n'obturant pas la voie de dérivation 42, l'obturateur 43 reste dans cette position.

Eventuellement, le procédé peut comporter l'enchainement suivant.

Le contrôleur 65 requiert de réactiver le moteur passif EPAS automatiquement durant une étape de première réactivation STP3. Le procédé de surveillance comporte alors une détection, durant étape STPD et avec le contrôleur 65, d'un éventuel échec de la réactivation si la valeur d'un paramètre moteur du moteur passif EPAS, mesuré avec un senseur moteur, est inférieur à une limite à l'issue d'une durée prédéterminée. Dans ce cas, le procédé comporte un déplacement, durant une STP4 et avec un actionneur 44 piloté par le contrôleur 65, de l'obturateur 43 obturant la voie de dérivation 42 alimentant en air le moteur passif EPAS pour ouvrir cette voie de dérivation 42. Le contrôleur 65 transmet un signal à l'actionneur 44, directement, ou via un système avionique par exemple, pour ouvrir la voie de dérivation 42. Dès lors, le procédé comporte une deuxième réactivation STP5 automatique du moteur passif EPAS avec le système de régulation 55. En cas d'échec, une alerte peut être générée avec l'alerteur 80.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Procédé de surveillance pour surveiller une installation motrice (2) comprenant au moins deux moteurs à combustion (10) et une chaîne de transmission (25) connectée à au moins un rotor (5) d'un aéronef (1), chaque moteur à combustion (10) ayant un arbre de puissance (20) connecté à la chaîne de transmission (25), l'installation motrice (2) comprenant un système de filtration (40) par moteur (10), chaque système de filtration (40) comprenant un filtre à barrière (41) et une voie de dérivation (42) obturable sur commande par un obturateur (43) ; l'aéronef (1) comportant un système de régulation qui, lors d'un mode de fonctionnement asymétrique, régule à un régime actif au moins un moteur actif (EACT) parmi les au moins deux moteurs à combustion (10) et met en veille au moins un moteur passif (EPAS) parmi les au moins deux moteurs à combustion (10), le moteur actif (EACT) développant avec son arbre de puissance (20) une puissance motrice non nulle participant à la mise en rotation du rotor (5), le moteur passif (EPAS) ne transmettant aucune puissance au rotor (5), un taux de colmatage de chaque filtre à barrière (41) étant calculé par un contrôleur (65) à l'aide d'une loi par défaut en dehors du mode de fonctionnement asymétrique,
**caractérisé en ce que** lors du mode de fonctionnement asymétrique le procédé de surveillance comporte les étapes suivantes :
- détermination (STP1) d'une valeur courante d'au moins deux paramètres de surveillance, lesdits au moins deux paramètres de surveillance comprenant un taux de colmatage (tx) de chaque filtre à barrière (41), le taux de colmatage (tx) du filtre à barrière (41) alimentant en air le moteur passif (EPAS) étant calculé par le contrôleur selon une loi alternative différente de la loi par défaut, le taux de colmatage (tx) du filtre à barrière (41) alimentant en air le moteur actif (EACT) étant calculé par le contrôleur selon la loi par défaut,
- comparaison (STP2) avec le contrôleur (65) de ladite valeur courante de chaque paramètre de surveillance à un seuil critique respectif,
- sous condition que la valeur courante d'au moins un paramètre de surveillance soit supérieure au seuil critique respectif, réalisation d'au moins une opération, ladite au moins une opération étant à choisir dans la liste suivante : i) réactivation (STP3) automatique du moteur passif (EPAS), ii) ouverture (STP4) automatique au moins de la voie de dérivation alimentant en air le moteur passif (EPAS) ou le moteur actif (EACT) en déplaçant l'obturateur (43) correspondant dans une position ouverte avec un actionneur (44).

2. Procédé selon la revendication 1,
**caractérisé en ce que** lesdits au moins deux paramètres de surveillance comportent au moins un paramètre à choisir parmi : une altitude de l'aéronef (1), une hauteur de l'aéronef (1), une vitesse de l'aéronef (1), une température de l'air ambiant.

3. Procédé selon l'une quelconque des revendications 1 à 2,
**caractérisé en ce que** lesdits au moins deux paramètres de surveillance comportent une demande de puissance.

4. Procédé selon l'une quelconque des revendications 1 à 3,
**caractérisé en ce que**, lors du mode de fonctionnement asymétrique, le procédé de surveillance comporte un affichage (STPAF), sur un afficheur (81), de la valeur courante du taux de colmatage (tx) du filtre à barrière (41) alimentant en air le moteur passif (EPAS) selon une charte graphique alternative différente d'une charte graphique par défaut utilisée pour afficher le taux de colmatage (tx) du filtre à barrière alimentant en air le moteur actif (EACT).

5. Procédé selon l'une quelconque des revendications 1 à 4, **caractérisé en ce que** la loi alternative est : $tx = tx 0 - dt * alpha ,$ où « tx » représente la valeur courante du taux de colmatage, «tx0 » représente la valeur du taux de colmatage au moment d'une activation du mode de fonctionnement asymétrique, « dt » représente le temps passé depuis ladite activation du mode de fonctionnement asymétrique, « alpha » représente un paramètre d'ajustement, « = » représente le signe de l'égalité, « - » représente le signe de la soustraction, « * » représente le signe de la multiplication.

6. Procédé selon la revendication 5,
**caractérisé en ce que** ledit paramètre d'ajustement (alpha) est une constante prédéterminée.

7. Procédé selon la revendication 5,
**caractérisé en ce que** ledit paramètre d'ajustement (alpha) est une variable déterminée en appliquant une loi d'ajustement prédéterminée.

8. Procédé selon l'une quelconque des revendications 1 à 7,
**caractérisé en ce que** lors du mode de fonctionnement asymétrique, le procédé de surveillance comporte une comparaison (STP2) de ladite valeur courante de chaque paramètre de surveillance à un seuil de vigilance respectif, et une génération (STPWARN) d'une alerte avec un alerteur (80) quand la valeur courante d'au moins un paramètre de surveillance est supérieure au seuil de vigilance respectif.

9. Procédé selon l'une quelconque des revendications 1 à 8, **caractérisé en ce que** la voie de dérivation (42) alimentant en air le moteur passif (EPAS) étant obturée par l'obturateur (43) associé durant le mode de fonctionnement asymétrique, ladite réalisation d'au moins une opération comporte successivement :
- réactivation (STP3) automatique du moteur passif (EPAS), avec le système de régulation (55),
- si le moteur passif (EPAS) n'est pas réactivé à l'issue d'une durée prédéterminée, ouverture (STP4) de la voie de dérivation alimentant en air le moteur passif (EPAS) en déplaçant dans une position ouverte l'obturateur (43) obturant cette voie de dérivation, puis
- nouvelle réactivation (STP5) automatique du moteur passif avec le système de régulation (55).

10. Procédé selon la revendication 9,
**caractérisé en ce que** le procédé comporte une détection (STPD) que le moteur passif (EPAS) n'est pas réactivé à l'issue d'une durée prédéterminée lorsqu'au moins un paramètre moteur prédéterminé de ce moteur passif est inférieur à une limite respective.

11. Aéronef (1), ledit aéronef (1) ayant une installation motrice (2) comprenant au moins deux moteurs à combustion (10) et une chaîne de transmission (25) connectée à au moins un rotor (5), chaque moteur à combustion (10) ayant un arbre de puissance (20) connecté à la chaîne de transmission (25), l'installation motrice (2) comprenant un système de filtration (40) par moteur respectif, chaque système de filtration (40) comprenant un filtre à barrière (41) et une voie de dérivation (42) obturable sur commande par un obturateur (43), l'aéronef (1) comportant un système de régulation qui, lors d'un mode de fonctionnement asymétrique, régule à un régime actif au moins un moteur actif (EACT) parmi les au moins deux moteurs à combustion (10) et met en veille au moins un moteur passif (EPAS) parmi les au moins deux moteurs à combustion (10), le moteur actif (EACT) développant lors du régime actif et avec son arbre de puissance (20) une puissance motrice active non nulle participant à la mise en rotation du rotor (5), le moteur passif (EPAS) ne transmettant aucune puissance au rotor (5),
**caractérisé en ce que** l'aéronef (1) comporte au moins un contrôleur (65) configuré pour mettre en œuvre le procédé de surveillance selon l'une quelconque des revendications 1 à 10 conjointement avec le système de régulation (55) et les actionneurs (44).

12. Aéronef selon la revendication 11,
**caractérisé en ce que** l'aéronef (1) comporte au moins un des senseurs de surveillance (70) suivants : un senseur de température (71) extérieure mesurant une température extérieure de l'air ambiant entournant l'aéronef (1), un senseur de vitesse (72) mesurant une vitesse courante de l'aéronef (1), un senseur de hauteur (73), un senseur d'altitude (74), un anticipateur (95) pour évaluer une demande de puissance.

13. Aéronef selon l'une quelconque des revendications 11 à 12, **caractérisé en ce que** l'aéronef (1) comporte un alerteur (80).

14. Aéronef selon l'une quelconque des revendications 11 à 13, **caractérisé en ce que** l'aéronef (1) comporte un afficheur (81).
